# FASCICULE DE BREVET EUROPEEN

(11) **EP 4 382 372 B1**
(45) Date de publication et mention de la délivrance du brevet: **20.05.2026**
(21) Numéro de dépôt: 23214062.4
(22) Date de dépôt: 04.12.2023
(51) Int. Cl.: B60S 1/52, B60S 1/56, B05B 15/74, B60S 1/60

(54) **DISPOSITIF DE NETTOYAGE ET DE PROJECTION DE LIQUIDE DE LAVAGE POUR VÉHICULE AUTOMOBILE**
REINIGUNGS- UND SPRITZVORRICHTUNG FÜR EINE WASCHFLÜSSIGKEIT FÜR EIN KRAFTFAHRZEUG
CLEANING AND SPRAYING DEVICE FOR A WASHING LIQUID FOR A MOTOR VEHICLE

(30) Priorité: 06.12.2022 FR 2212850
(43) Date de publication de la demande: 12.06.2024
(73) Titulaire: Valeo Systèmes d'Essuyage, 78320 Le Mesnil-Saint-Denis (FR)
(72) Inventeur: DOLLE, Yoann, 63500 ISSOIRE (FR); THEBAULT, Denis, 63500 ISSOIRE (FR); LAHILAIRE, Jean-Baptiste, 78320 LA VERRIERE (FR); BAUDOUIN, Maxime, 63500 ISSOIRE (FR); PICOT, Philippe, 63500 ISSOIRE (FR)
(74) Mandataire: Valeo Visibility

(56) Documents cités:
- EP-B1- 1 071 592
- EP-B1- 2 274 185
- DE-A1- 102005 002 259
- DE-B4- 10 260 839
- FR-B1- 2 810 606

## Description

La présente invention concerne le domaine des dispositifs de nettoyage notamment pour la projection de liquide de lavage sur une surface à nettoyer.

L'invention concerne plus particulièrement un dispositif de projection de liquide de lavage sur une surface vitrée d'un véhicule automobile, du type comportant un corps cylindrique fixé sur un élément de carrosserie du véhicule et un piston comportant à une extrémité une buse de distribution du liquide de lavage. Le piston est notamment configuré pour se déplacer axialement par rapport au corps cylindrique entre une position escamotée et une position saillante, sous l'effet de la pression du liquide de lavage et au travers d'un orifice agencé dans l'élément de carrosserie.

Outre l'intérêt esthétique d'un tel dispositif de nettoyage escamotable, qui évite ainsi la présence d'un bloc proéminent à la surface de la carrosserie du véhicule, une telle disposition présente l'avantage de mieux protéger la buse, notamment du gel.

En effet, la buse n'est plus refroidie par l'air qui s'écoule le long de la carrosserie lorsque le véhicule se déplace et peut même bénéficier, dans le cas où la buse est implantée sur le capot moteur du véhicule, de la chaleur fournie par le moteur à combustion pour éviter que n'apparaissent, par temps froids, des bouchons de glace.

Néanmoins, lorsque le dispositif de nettoyage est disposé sur une partie basse du véhicule automobile et que le réservoir de liquide de lavage est disposé plus haut que le dispositif de nettoyage, par exemple afin de projeter du liquide de lavage sur les optiques de phares, des risques d'écoulement passif du liquide de lavage par la simple gravité peuvent apparaitre et ainsi vider le réservoir de liquide de lavage même lorsque le dispositif de nettoyage est rétracté.

D'autres dispositifs de nettoyage sont décrits dans les publications FR2810606 et DE10260839.

Un des buts de la présente invention est donc de remédier au moins partiellement aux inconvénients de l'art antérieur et de proposer un dispositif de nettoyage rétractable limitant les risques d'écoulement passif du liquide de lavage.

La présente invention concerne donc un dispositif de nettoyage rétractable pour élément d'un véhicule automobile, ledit dispositif de nettoyage comportant au moins un piston mobile en coulissement selon un axe longitudinal dans un corps creux, ledit piston étant également creux et comportant à une première extrémité une entrée de liquide de lavage et à une deuxième extrémité au moins une sortie de liquide de lavage,
ledit dispositif de nettoyage comportant en outre une buse de distribution du liquide de lavage fixée à la deuxième extrémité du piston, ladite buse de distribution comportant au moins une sortie d'éjection du liquide de lavage connectée fluidiquement à l'au moins une sortie de liquide de lavage de la deuxième extrémité du piston,
le dispositif de nettoyage comportant au moins une membrane déformable élastiquement disposée entre la deuxième extrémité du piston et la buse de distribution, ladite au moins une membrane recouvrant et refermant ladite au moins une sortie de liquide de lavage du piston, ladite au moins une membrane étant déformable sous une pression déterminée du liquide de lavage de sorte à permettre la liaison fluidique entre l'au moins une sortie de liquide de lavage du piston et l'au moins une sortie d'éjection du liquide de lavage de la buse de distribution.

Selon un aspect de l'invention, l'au moins une membrane est déformable à une pression déterminée de liquide de lavage supérieure ou égale à 0,1 bar, de préférence 0.6 bar.

Selon l'invention, l'au moins une membrane est un manchon comportant une première et une deuxième extrémité, ledit manchon entourant la deuxième extrémité du piston.

Selon un autre aspect de l'invention, l'au moins une sortie de liquide de lavage du piston est disposée perpendiculairement à l'axe longitudinal de coulissement dudit piston et en ce que les première et deuxième extrémités du manchon sont ouvertes.

Selon un autre aspect de l'invention, l'au moins une sortie de liquide de lavage du piston est disposée dans l'axe longitudinal de coulissement du piston, et la première extrémité du manchon est ouverte et entoure la deuxième extrémité du piston, et la deuxième extrémité du manchon est fermée et disposée en vis-à-vis de l'au moins une sortie de liquide de lavage du piston,
ladite deuxième extrémité fermée du manchon comportant au moins une fente d'ouverture configurée de sorte à permettre le passage du liquide de lavage à partir d'une pression déterminée.

Selon un autre aspect de l'invention, la buse de distribution compresse au moins une portion de l'au moins une membrane contre 1a deuxième extrémité du piston de sorte à maintenir ladite au moins une membrane.

Selon un autre aspect de l'invention, la buse de distribution et/ou la membrane comporte une surépaisseur à l'endroit de la portion compressée de l'au moins une membrane.

Selon un autre aspect de l'invention, la portion compressée est disposée à l'endroit de la première extrémité du manchon.

Selon un autre aspect de l'invention, l'au moins une membrane est un manchon entourant la deuxième extrémité du piston, la portion compressée s'étendant sur toute la périphérie de la deuxième extrémité du piston.

Selon un autre aspect de l'invention, l'au moins une membrane est réalisée dans un matériau élastomère.

Selon un autre aspect de l'invention, le dispositif de nettoyage est une rampe télescopique de distribution de liquide de lavage.

Selon un autre aspect de l'invention, la rampe télescopique comprend au moins une buse.

Selon un autre aspect de l'invention, la rampe télescopique comprend deux buses.

Selon un autre aspect de l'invention, la rampe télescopique comprend une pluralité de buses.

Selon un aspect de l'invention, la rampe télescopique comprend au moins une membrane déformable élastiquement présentant au moins l'une des caractéristiques précédemment décrites.

Selon un autre aspect de l'invention la rampe télescopique s'étend au moins partiellement le long de la surface à nettoyer.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique en perspective d'un dispositif de nettoyage rétractable,
[Fig 2] la figure 2 montre une représentation schématique en coupe d'un dispositif de nettoyage en position rétractée,
[Fig 3] la figure 3 montre une représentation schématique en coupe d'un dispositif de nettoyage en position déployée,
[Fig 4] la figure 4 montre une représentation schématique en coupe de la buse d'un dispositif de nettoyage,
[Fig 5] la figure 5 montre une représentation schématique en perspective d'une membrane selon un premier mode de réalisation,
[Fig 6] la figure 6 montre une représentation schématique en perspective et en coupe de la buse d'un dispositif de nettoyage selon un premier mode de réalisation,
[Fig 7] la figure 7 montre une représentation schématique en perspective et en coupe de la buse d'un dispositif de nettoyage selon un deuxième mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

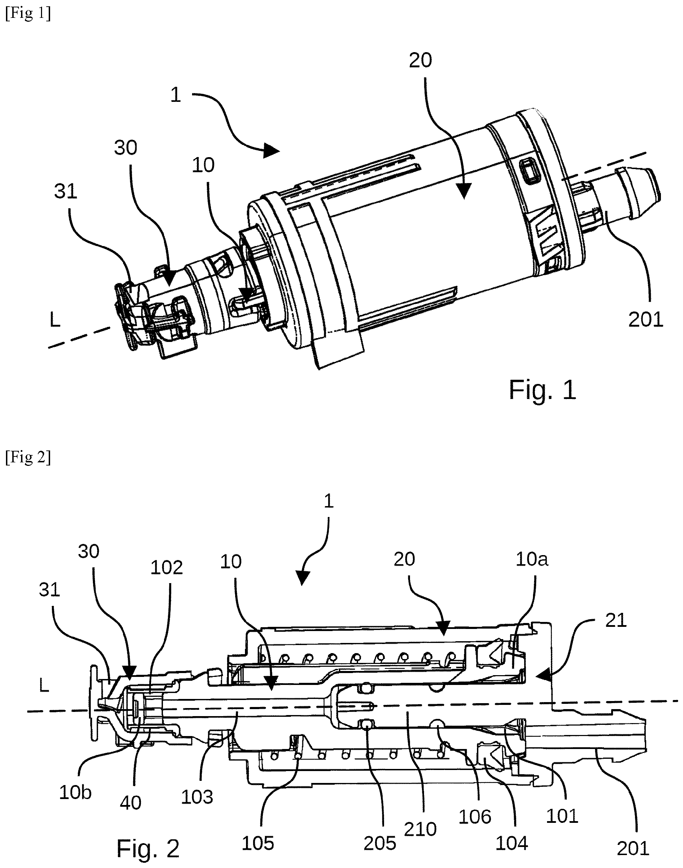

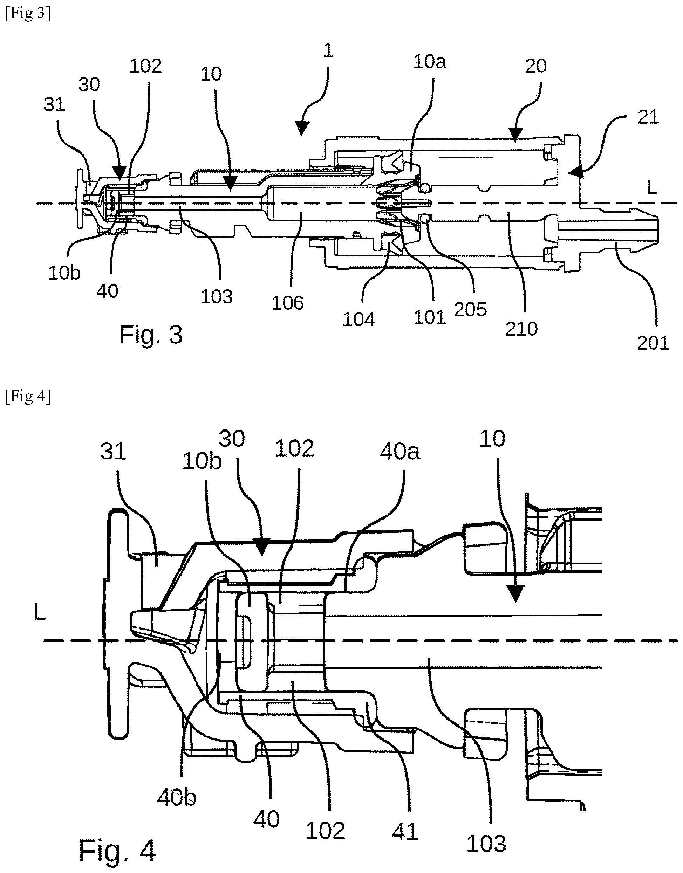

La figure 1 montre un dispositif de nettoyage 1 rétractable pour la projection de liquide de lavage sur une surface à nettoyer pour un véhicule automobile. Le dispositif de nettoyage 1 comporte notamment au moins un piston 10 mobile en coulissement selon un axe longitudinal L dans un corps creux 20 entre une position rétractée (visible aux figures 1 et 2) et une position déployée (visible figure 3). L'étanchéité entre le corps creux 20 et le piston 10 peut être assurée par un joint torique 104 disposé autour de sa première extrémité 10a.

Le corps creux 20 comporte notamment un embout de connexion 201 connecté par un tuyau (non représenté) à un réservoir de liquide de lavage (non représenté), Le piston 10 est également creux et comporte à une première extrémité 10a une entrée 101 de liquide de lavage et à une deuxième extrémité 10b au moins une sortie 102 de liquide de lavage. L'entrée 101 et la sortie 201 de liquide de lavage du piston 10 peuvent notamment être reliées par un canal 103. Le corps creux 20 peut comporter un moyen d'obturation 210 obturant l'entrée 101 de liquide de lavage du piston 10 lorsque ce dernier est en position rétractée. Un moyen élastique 105, ici un ressort, peut être disposé dans le corps creux 20 afin de repousser passivement le piston 10 en position rétractée. Lorsqu'une pression de liquide de lavage supérieure à la pression exercée par le moyen élastique 105 est envoyée dans le corps creux 20, le liquide de lavage repousse le piston 10 en position déployée (voir figure 3). En position déployée, le moyen d'obturation 210 n'obstrue plus l'entrée 101 de liquide de lavage permettant l'éjection du liquide de lavage.

Dans l'exemple illustré aux figures 1 à 3, le moyen d'obturation 210 est un doigt s'étendant selon l'axe longitudinal L et s'insérant dans un logement 106 ménagé dans la première extrémité 10a du piston 10. En position rétractée, le doigt 210 est inséré dans ce logement 106 et obstrue l'entrée 101 de liquide de lavage du piston 10. L'étanchéité entre le doigt 210 et le logement 106 peut être assurée par un joint torique 205 entourant le doigt 210. La base du logement 106 peut être évasée afin qu'en position déployée, le doigt 210 n'obstrue plus l'entrée 101 de liquide de lavage du piston 10 (voir figure 3).

Le dispositif de nettoyage 1 comporte en outre une buse de distribution 30 du liquide de lavage fixée à la deuxième extrémité 10b du piston 10. Cette buse de distribution 30 comporte au moins une sortie d'éjection 31 du liquide de lavage connectée fluidiquement à l'au moins une sortie 102 de liquide de lavage de la deuxième extrémité 10b du piston10. La buse de distribution 30 peut notamment être clipsée sur la deuxième extrémité 10b du piston 10.

Comme le montre plus en détail la figure 4, le dispositif de nettoyage 10 comporte au moins une membrane 40 déformable élastiquement disposée entre la deuxième extrémité 10b du piston 10 et la buse de distribution 30. Cette, au moins une, membrane 40 recouvre et referme l'au moins une sortie 102 de liquide de lavage du piston 10. Cette, au moins une, membrane 40 est plus particulièrement déformable sous une pression déterminée du liquide de lavage de sorte à permettre la liaison fluidique entre l'au moins une sortie 102 de liquide de lavage du piston 10 et l'au moins une sortie d'éjection 31 du liquide de lavage de la buse de distribution 30.

La membrane 40 peut notamment être réalisée dans un matériau élastomère, par exemple en silicone.

La présence de cette membrane 40 permet, notamment lorsque que le dispositif de nettoyage 1 est disposé à une hauteur inférieure du réservoir de liquide de lavage, de limiter les risques d'écoulement passif du liquide de lavage et ce même si le piston 10 est en position rétractée.

L'au moins une membrane 40 est déformable à une pression déterminée de liquide de lavage supérieure ou égale à 0,1 bar, de préférence 0.6 bar. Avantageusement, la membrane 40 est suffisamment résistante pour ne pas se déformer pour une pression correspondant au poids d'un volume de liquide de lavage de la contenance du réservoir de liquide de lavage.

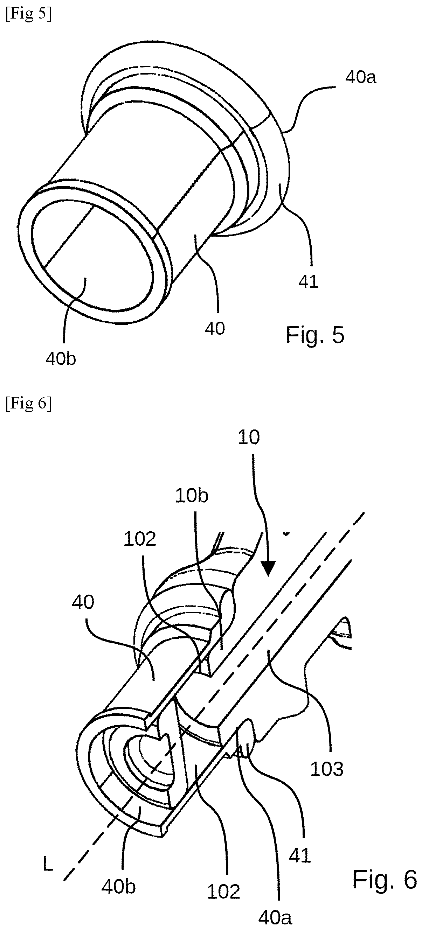

Selon un premier mode de réalisation illustré aux figures 2 à 7, l'au moins une membrane 40 peut être un manchon comportant une première 40a et une deuxième 40b extrémité. Le manchon 40 entoure la deuxième extrémité 10b du piston 10.

Selon une première variante illustrée aux figures 2 à 4 et 6, l'au moins une sortie 102 de liquide de lavage du piston 10 est disposée perpendiculairement à l'axe longitudinal L de coulissement dudit piston 10. Dans l'exemple illustrée, la deuxième extrémité 10b du piston 10 comporte deux ouvertures disposées de part et d'autre de l'axe longitudinal L jouant le rôle de sorties 102 de liquide de lavage. Toujours selon cette première variante, les première 40a et deuxième 40b extrémités du manchon 40 sont toutes deux ouvertes. Le manchon 40 est inséré autour de la deuxième extrémité 10b du piston 10 par sa première extrémité 40a et recouvre les ouvertures 102. Lorsque du liquide de lavage traverse le piston 10 et arrive au niveau des ouvertures 102, si la pression est suffisante, cela déforme la paroi latérale du manchon 40 qui se soulève et le liquide de lavage peut rejoindre la buse de distribution 30 par la deuxième extrémité 40b du manchon 40.

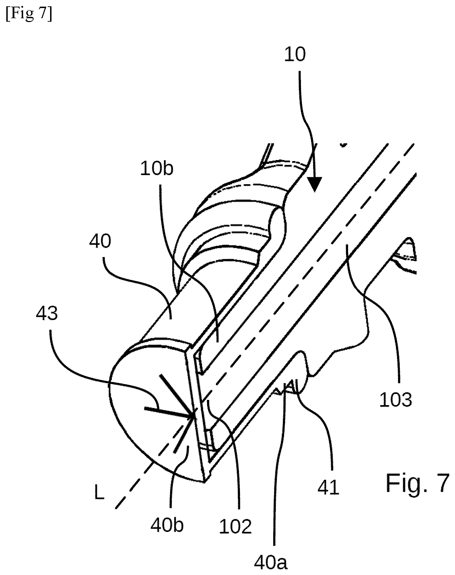

Selon une deuxième variante illustrée à la figure 7, l'au moins une sortie 102 de liquide de lavage du piston 10 est disposée dans l'axe longitudinal L de coulissement du piston 10. La première extrémité 40a du manchon 40 est ouverte et entoure la deuxième extrémité 10b du piston 10. Le manchon 40 est inséré autour de la deuxième extrémité 10b du piston 10 par sa première extrémité 40a et recouvre les ouvertures 102. La deuxième extrémité 40b du manchon 40 est quant à elle fermée et est disposée en vis-à-vis de l'au moins une sortie 102 de liquide de lavage du piston 10.

Toujours selon cette deuxième variante, la deuxième extrémité 40b fermée du manchon 40 comporte au moins une fente d'ouverture 43 configurée de sorte à permettre le passage du liquide de lavage à partir d'une pression déterminée. La deuxième extrémité 40b fermée du manchon 40 peut notamment comporter une multitude de fentes d'ouvertures 43 disposées en étoile. Lorsque du liquide de lavage traverse le piston 10 et arrive au niveau de la deuxième extrémité 40b fermée du manchon 40, si la pression est suffisante, cela déforme la paroi latérale du manchon 40 et les fentes d'ouvertures 43 s'écartent permettant au liquide de lavage de rejoindre la buse de distribution 30.

Selon un deuxième mode de réalisation non représenté, la membrane 40 peut être une simple feuille disposée en vis-à-vis d'une sortie 102 de liquide de lavage du piston 10.

Afin de maintenir l'au moins une membrane 40, la buse de distribution 30 peut notamment compresser au moins une portion de l'au moins une membrane 40 contre la deuxième extrémité 10b du piston 10. Afin de faciliter cette compression, la buse de distribution 30 et/ou la membrane 40 peut comporter une surépaisseur 41 à l'endroit de la portion compressée de l'au moins une membrane 40.

Lorsque l'au moins une membrane 40 est un manchon, la portion compressée peut notamment être disposée à l'endroit de la première extrémité 40a du manchon 40. Dans les exemples illustrés aux figures 2 à 7, le manchon 40 comporte ainsi un bourrelet 41 annulaire entourant sa première extrémité 40a.

Afin d'améliorer la redirection du liquide de lavage vers la sortie d'éjection 31 du liquide de lavage de la buse de distribution 30, lorsque l'au moins une membrane 40 est un manchon entourant la deuxième extrémité 10b du piston 10, la portion compressée peut notamment s'étendre sur toute la périphérie de la deuxième extrémité 10b du piston 10. Cela permet également de former un joint d'étanchéité entre la buse de distribution 30 et le piston 10 et ainsi permet de garantir l'étanchéité entre ces deux éléments.

Ainsi, on voit bien que la présence de l'au moins une membrane 40 permet de bloquer l'écoulement du liquide de lavage jusqu'à une certaine pression déterminée par la déformabilité de l'au moins une membrane 40. Cela permet ainsi d'éviter, lorsque le dispositif de nettoyage 1est disposé plus bas que le réservoir de liquide de lavage, que le liquide de lavage s'écoule passivement même si le piston 10 est rétracté.

## Revendications

1. Dispositif de nettoyage (1) rétractable pour élément d'un véhicule automobile, ledit dispositif de nettoyage (1) comportant au moins un piston (10) mobile en coulissement selon un axe longitudinal (L) dans un corps creux (20), ledit piston (10) étant également creux et comportant à une première extrémité (10a) une entrée (101) de liquide de lavage et à une deuxième extrémité (10b) au moins une sortie (102) de liquide de lavage,
ledit dispositif de nettoyage (1) comportant en outre une buse de distribution (30) du liquide de lavage fixée à la deuxième extrémité (10b) du piston (10), ladite buse de distribution (30) comportant au moins une sortie d'éjection (31) du liquide de lavage connectée fluidiquement à l'au moins une sortie (102) de liquide de lavage de la deuxième extrémité (10b) du piston (10),
le dispositif de nettoyage (10) comportant au moins une membrane (40) déformable élastiquement disposée entre la deuxième extrémité (10b) du piston (10) et la buse de distribution (30), ladite au moins une membrane (40) recouvrant et refermant ladite au moins une sortie (102) de liquide de lavage du piston (10), ladite au moins une membrane (40) étant déformable sous une pression déterminée du liquide de lavage de sorte à permettre la liaison fluidique entre l'au moins une sortie (102) de liquide de lavage du piston (10) et l'au moins une sortie d'éjection (31) du liquide de lavage de la buse de distribution (30), **caractérisé en ce que** l'au moins une membrane (40) est un manchon comportant une première (40a) et une deuxième (40b) extrémité, ledit manchon (40) entourant la deuxième extrémité (10b) du piston (10)..

2. Dispositif de nettoyage (1) selon la revendication précédente, **caractérisé en ce que** l'au moins une membrane (40) est déformable à une pression déterminée de liquide de lavage supérieure ou égale à 0,1 bar, de préférence 0.6 bar.

3. Dispositif de nettoyage (1) selon l'une quelconque des revendications précédentes , **caractérisé en ce que** l'au moins une sortie (102) de liquide de lavage du piston (10) est disposée perpendiculairement à l'axe longitudinal (L) de coulissement dudit piston (10) et **en ce que** les première (40a) et deuxième (40b) extrémités du manchon (40) sont ouvertes.

4. Dispositif de nettoyage (1) selon l'une quelconque des revendications 1 ou 2,
**caractérisé en ce que** l'au moins une sortie (102) de liquide de lavage du piston (10) est disposée dans l'axe longitudinal (L) de coulissement du piston (10), et en ce la première extrémité (40a) du manchon (40) est ouverte et entoure la deuxième extrémité (10b) du piston (10),
et **en ce que** la deuxième extrémité (40b) du manchon (40) est fermée et disposée en vis-à-vis de l'au moins une sortie (102) de liquide de lavage du piston (10), ladite deuxième extrémité (40b) fermée du manchon (40) comportant au moins une fente d'ouverture (43) configurée de sorte à permettre le passage du liquide de lavage à partir d'une pression déterminée.

5. Dispositif de nettoyage (1) selon l'une quelconque des revendications précédentes, **caractérisé en ce que** la buse de distribution (30) compresse au moins une portion de l'au moins une membrane (40) contre la deuxième extrémité (10b) du piston (10) de sorte à maintenir ladite au moins une membrane (40).

6. Dispositif de nettoyage (1) selon la revendication précédente, **caractérisé en ce que** la buse de distribution (30) et/ou la membrane (30) comporte une surépaisseur (41) à l'endroit de la portion compressée de l'au moins une membrane (30).

7. Dispositif de nettoyage (1) selon l'une quelconque des revendications 5 ou 6 en combinaison avec l'une quelconque des revendications 1 à 4, **caractérisé en ce que** la portion compressée est disposée à l'endroit de la première extrémité (40a) du manchon (40).

8. Dispositif de nettoyage (1) selon l'une quelconques des revendications 5 à 7, **caractérisé en ce que** l'au moins une membrane (40) est un manchon entourant la deuxième extrémité (10b) du piston (10), la portion compressée s'étendant sur toute la périphérie de la deuxième extrémité (10b) du piston (10).

9. Dispositif de nettoyage (1) selon l'une quelconque des revendications précédentes, **caractérisé en ce que** l'au moins une membrane (40) est réalisée dans un matériau élastomère.

## Patentansprüche

1. Einziehbare Reinigungsvorrichtung (1) für ein Element eines Kraftfahrzeugs, wobei die Reinigungsvorrichtung (1) mindestens einen Kolben (10) umfasst, der entlang einer Längsachse (L) in einem Hohlkörper (20) gleitend beweglich ist, wobei der Kolben (10) ebenfalls hohl ist und an einem ersten Ende (10a) einen Einlass (101) für Waschflüssigkeit und an einem zweiten Ende (10b) mindestens einen Auslass (102) für Waschflüssigkeit aufweist, wobei die Reinigungsvorrichtung (1) ferner eine Verteilerdüse (30) für die Waschflüssigkeit umfasst, die am zweiten Ende (10b) des Kolbens (10) befestigt ist, wobei die Verteilerdüse (30) mindestens einen Auswurfauslass (31) für die Waschflüssigkeit aufweist, der fluidisch mit dem mindestens einen Auslass (102) für Waschflüssigkeit am zweiten Ende (10b) des Kolbens (10) verbunden ist, wobei die Reinigungsvorrichtung (10) mindestens eine elastisch verformbare Membran (40) umfasst, die zwischen dem zweiten Ende (10b) des Kolbens (10) und der Verteilerdüse (30) angeordnet ist, wobei die mindestens eine Membran (40) den mindestens einen Auslass (102) für Waschflüssigkeit des Kolbens (10) bedeckt und verschließt, wobei die mindestens eine Membran (40) unter einem bestimmten Druck der Waschflüssigkeit verformbar ist, um die fluidische Verbindung zwischen dem mindestens einen Auslass (102) für Waschflüssigkeit des Kolbens (10) und dem mindestens einen Auswurfauslass (31) für Waschflüssigkeit der Verteilerdüse (30) zu ermöglichen, **dadurch gekennzeichnet, dass** die mindestens eine Membran (40) eine Manschette ist, die ein erstes (40a) und ein zweites (40b) Ende aufweist, wobei die Manschette (40) das zweite Ende (10b) des Kolbens (10) umgibt.

2. Reinigungsvorrichtung (1) nach dem vorhergehenden Anspruch, **dadurch gekennzeichnet, dass** die mindestens eine Membran (40) bei einem bestimmten Druck der Waschflüssigkeit verformbar ist, der größer oder gleich 0,1 bar, vorzugsweise 0,6 bar ist.

3. Reinigungsvorrichtung (1) nach einem der vorhergehenden Ansprüche, **dadurch gekennzeichnet, dass** der mindestens eine Auslass (102) für Waschflüssigkeit des Kolbens (10) senkrecht zur Längsachse (L) der Gleitbewegung des Kolbens (10) angeordnet ist und dass das erste (40a) und das zweite (40b) Ende der Manschette (40) offen sind.

4. Reinigungsvorrichtung (1) nach einem der Ansprüche 1 oder 2, **dadurch gekennzeichnet, dass** der mindestens eine Auslass (102) für Waschflüssigkeit des Kolbens (10) in der Längsachse (L) der Gleitbewegung des Kolbens (10) angeordnet ist, und dass das erste Ende (40a) der Manschette (40) offen ist und das zweite Ende (10b) des Kolbens (10) umgibt, und dass das zweite Ende (40b) der Manschette (40) geschlossen ist und gegenüber dem mindestens einen Auslass (102) für Waschflüssigkeit des Kolbens (10) angeordnet ist, wobei das geschlossene zweite Ende (40b) der Manschette (40) mindestens einen Öffnungsschlitz (43) aufweist, der so konfiguriert ist, dass er den Durchgang der Waschflüssigkeit ab einem bestimmten Druck ermöglicht.

5. Reinigungsvorrichtung (1) nach einem der vorhergehenden Ansprüche, **dadurch gekennzeichnet, dass** die Verteilerdüse (30) mindestens einen Abschnitt der mindestens einen Membran (40) gegen das zweite Ende (10b) des Kolbens (10) presst, um die mindestens eine Membran (40) zu halten.

6. Reinigungsvorrichtung (1) nach dem vorhergehenden Anspruch, **dadurch gekennzeichnet, dass** die Verteilerdüse (30) und/oder die Membran (30) eine Verdickung (41) an der Stelle des komprimierten Abschnitts der mindestens einen Membran (30) aufweist.

7. Reinigungsvorrichtung (1) nach einem der Ansprüche 5 oder 6 in Kombination mit einem der Ansprüche 1 bis 4, **dadurch gekennzeichnet, dass** der komprimierte Abschnitt an der Stelle des ersten Endes (40a) der Manschette (40) angeordnet ist.

8. Reinigungsvorrichtung (1) nach einem der Ansprüche 5 bis 7, **dadurch gekennzeichnet, dass** die mindestens eine Membran (40) eine Manschette ist, die das zweite Ende (10b) des Kolbens (10) umgibt, wobei sich der komprimierte Abschnitt über den gesamten Umfang des zweiten Endes (10b) des Kolbens (10) erstreckt.

9. Reinigungsvorrichtung (1) nach einem der vorhergehenden Ansprüche, **dadurch gekennzeichnet, dass** die mindestens eine Membran (40) aus einem Elastomermaterial hergestellt ist.

## Claims

1. Retractable cleaning device (1) for an element of a motor vehicle, said cleaning device (1) comprising at least one piston (10) slidably movable along a longitudinal axis (L) in a hollow body (20), said piston (10) also being hollow and having at a first end (10a) an inlet (101) for washing liquid and at a second end (10b) at least one outlet (102) for washing liquid, said cleaning device (1) further comprising a distribution nozzle (30) for the washing liquid fixed to the second end (10b) of the piston (10), said distribution nozzle (30) comprising at least one ejection outlet (31) for the washing liquid fluidically connected to the at least one washing liquid outlet (102) of the second end (10b) of the piston (10), the cleaning device (10) comprising at least one elastically deformable membrane (40) arranged between the second end (10b) of the piston (10) and the distribution nozzle (30), said at least one membrane (40) covering and closing said at least one washing liquid outlet (102) of the piston (10), said at least one membrane (40) being deformable under a predetermined pressure of the washing liquid so as to allow the fluidic connection between the at least one washing liquid outlet (102) of the piston (10) and the at least one ejection outlet (31) of the washing liquid of the distribution nozzle (30), **characterized in that** the at least one membrane (40) is a sleeve having a first (40a) and a second (40b) end, said sleeve (40) surrounding the second end (10b) of the piston (10).

2. Cleaning device (1) according to the preceding claim, **characterized in that** the at least one membrane (40) is deformable at a predetermined washing liquid pressure greater than or equal to 0.1 bar, preferably 0.6 bar.

3. Cleaning device (1) according to any one of the preceding claims, **characterized in that** the at least one washing liquid outlet (102) of the piston (10) is arranged perpendicular to the longitudinal sliding axis (L) of said piston (10) and **in that** the first (40a) and second (40b) ends of the sleeve (40) are open.

4. Cleaning device (1) according to any one of claims 1 or 2, **characterized in that** the at least one washing liquid outlet (102) of the piston (10) is arranged in the longitudinal sliding axis (L) of the piston (10), and **in that** the first end (40a) of the sleeve (40) is open and surrounds the second end (10b) of the piston (10), and **in that** the second end (40b) of the sleeve (40) is closed and arranged opposite the at least one washing liquid outlet (102) of the piston (10), said closed second end (40b) of the sleeve (40) comprising at least one opening slit (43) configured so as to allow the passage of washing liquid from a predetermined pressure.

5. Cleaning device (1) according to any one of the preceding claims, **characterized in that** the distribution nozzle (30) compresses at least one portion of the at least one membrane (40) against the second end (10b) of the piston (10) so as to maintain said at least one membrane (40).

6. Cleaning device (1) according to the preceding claim, **characterized in that** the distribution nozzle (30) and/or the membrane (30) comprises a thickened portion (41) at the location of the compressed portion of the at least one membrane (30).

7. Cleaning device (1) according to any one of claims 5 or 6 in combination with any one of claims 1 to 4, **characterized in that** the compressed portion is arranged at the location of the first end (40a) of the sleeve (40).

8. Cleaning device (1) according to any one of claims 5 to 7, **characterized in that** the at least one membrane (40) is a sleeve surrounding the second end (10b) of the piston (10), the compressed portion extending around the entire periphery of the second end (10b) of the piston (10).

9. Cleaning device (1) according to any one of the preceding claims, **characterized in that** the at least one membrane (40) is made of an elastomer material.
